# EUROPEAN PATENT APPLICATION

(11) **EP 2 822 304 A1**
(43) Date of publication of application: **07.01.2015**
(21) Application number: 13754636.2
(22) Date of filing: 01.02.2013
(51) Int. Cl.: H04W 4/02

(54) **INFORMATION OBTAINING METHOD, INFORMATION PUSHING METHOD, MOBILE TERMINAL, SERVER, AND SYSTEM**

(30) Priority: 29.02.2012 CN 201210049763
(71) Applicant: Tencent Technology (Shenzhen) Company Limited, Shenzhen, Guangdong 518044 (CN)
(72) Inventor: LI, Yang, Shenzhen Guangdong 518044 (CN); WANG, Zhanwei, Shenzhen Guangdong 518044 (CN); HOU, Jie, Shenzhen Guangdong 518044 (CN)
(74) Representative: Jansen, Cornelis Marinus
(86) International application number: PCT/CN2013/071275
(87) International publication number: WO 2013/127289

(57) **Abstract**

The present disclosure relates to the field of computers and an information obtaining method, an information pushing method, a mobile terminal, a server, and a system are provided. The information pushing method includes: a server receiving location information of a current spot of a mobile terminal sent from the mobile terminal; the server obtaining a region information list of the current spot through searching according to the location information and sending the region information list based on the current spot to the mobile terminal; and the server receiving a signal sent from the mobile terminal, and returning region information corresponding to the signal to the mobile terminal. In this disclosure, by obtaining the spot where a user currently arrives, pushing the region information list corresponding to the spot to the user, and pushing the region information related to the current spot to the user according to an option selected by the user in the region information list, diverse demands of the user can be met and interaction with the current spot can be improved due to the region information corresponding to the current spot.

## Description

### CROSS REFERENCE TO RELATED APPLICATIONS

This application claims the benefit of Chinese Patent Application No. 201210049763.6 filed on February 29, 2012 before the Chinese State Intellectual Property Office, and entitled "Information Obtaining Method, Information Pushing Method, Mobile Terminal, Server, and System", the disclosure of which is incorporated herein in its entirety by reference.

### TECHNICAL FIELD

The present disclosure relates to computer technologies, and in particular, to an information obtaining method, an information pushing method, a mobile terminal, a server, and a system.

### BACKGROUND

With development of the Internet, especially rapid development of wireless networks, the number of devices accessing mobile networks is becoming more and more. In this case, location based service (LBS) is widely used and users can obtain information about their locations via various methods.

For example, the methods include positioning through a global positioning system (GPS), positioning through a GPS chip contained in a terminal, positioning through a base station of a mobile network operator and positioning through wireless fidelity (WiFi) which is developed rapidly recently.

In the process of implementing the present disclosure, the inventors have found that the traditional art at least has the following problems.

In the traditional art, obtaining locations of users is realized, which meets the positioning requirement of the users, so that the users can clearly know their locations, but cannot meet diverse demands of the users for geographic locations, and lacks interaction with region information of a location where a user is currently located.

### SUMMARY

To solve the problems in the traditional art, the embodiments of the present disclosure provide an information obtaining method, an information pushing method, a mobile terminal, a server, and a system. The technical solutions are as follows.

The information obtaining method includes:
a mobile terminal sending location information of a current spot to a server, so that the server obtains a region information list based on the current spot through searching according to the location information and sends the region information list based on the current spot to the mobile terminal;
the mobile terminal sending a signal to the server in response to a choice of a user in the region information list; and
the mobile terminal receiving and displaying region information corresponding to the signal returned from the server.

Before the mobile terminal sends the location information of the current spot to the server, the method further includes:
the mobile terminal obtaining the location information of the current spot and displaying a reminder regularly at a set time interval according to a preset timing operation of a timer.

Further, the region information list at least includes a spot introduction option and a route map option.

Further, the region information list further includes at least one of a scenic spot brief introduction option, a surrounding food & drink option, a travel strategy option, a downloading software skin option, a promotion information option and a weather option.

The information pushing method includes:
a server receiving location information of a current spot of a mobile terminal sent from the mobile terminal;
the server obtaining a region information list based on the current spot through searching according to the location information and sending the region information list based on the current spot to the mobile terminal; and
the server receiving a signal sent from the mobile terminal and returning region information corresponding to the signal to the mobile terminal.

Before the sever sends the region information list based on the current spot to the mobile terminal, the method further includes:
the server sorting options in the region information list based on the current spot.

The mobile terminal includes:
a location information sending module configured to send location information of a current spot to a server, so that the server obtains a region information list based on the current spot through searching according to the location information;
a signal sending module configured to send a signal to the server in response to a choice of a user in the region information list; and
a region information displaying module configured to receive and display region information corresponding to the signal returned from the server.

Further, the region information list at least includes an introduction option and a route map option.

The mobile terminal further includes:
a timer module configured to obtain the location information of the current spot and control the mobile terminal to display a reminder at a set time interval regularly.

The server includes:
a location information receiving module configured to receive location information of a current spot of a mobile terminal sent from the mobile terminal;
a list obtaining module configured to obtain a region information list based on the current spot through searching according to the location information and send the region information list based on the current spot to the mobile terminal; and
a region information sending module configured to receive a signal sent from the mobile terminal and return region information corresponding to the signal to the mobile terminal.

Further, the region information list obtained by the list obtaining module at least includes a spot introduction option and a route map option.

The server further includes:
an option sorting module configured to sort options in the region information list based on the current spot before the list obtaining module sends the region information list based on the current spot to the mobile terminal.

The information obtaining and pushing system includes a mobile terminal and a server;
the mobile terminal includes:
a location information sending module configured to send location information of a current spot to the server, so that the server obtains a region information list based on the current spot through searching according to the location information;
a signal sending module configured to send a signal to the server in response to a choice of a user in the region information list; and
a region information displaying module configured to receive and display region information corresponding to the signal returned from the server; and
the server includes:
a location information receiving module configured to receive location information of the current spot of the mobile terminal sent from the mobile terminal;
a list obtaining module configured to obtain the region information list based on the current spot through searching according to the location information and send the region information list based on the current spot to the mobile terminal; and
a region information sending module configured to receive the signal sent from the mobile terminal, and return the region information corresponding to the signal to the mobile terminal.

The mobile terminal further includes:
a timer module configured to obtain the location information of the current spot and control the mobile terminal to display a reminder at a set time interval regularly.

The server further includes:
an option sorting module configured to sort options in the region information list based on the current spot before the list obtaining module sends the region information list based on the current spot to the mobile terminal.

The advantageous effect brought out by the technical solutions according to the embodiments of the present disclosure is as follows.

By obtaining the spot where a user currently arrives, pushing the region information list corresponding to the spot to the user, and pushing the region information related to the current spot to the user according to an option selected by the user in the region information list, diverse demands of the user can be met and interaction with the current spot can be improved due to the region information corresponding to the current spot.

### BRIEF DESCRIPTION OF THE DRAWINGS

In order to describe the technical solutions according to the embodiments of the present disclosure more clearly, brief explanation of the attached drawings used in the description of the embodiments will be given below. It is obvious that the attached drawings in the following description only show some embodiments of the present disclosure, and other attached drawings can be learn by those of ordinary skill in the art based on these attached drawings without creative efforts.
Figure 1 is a schematic flowchart illustrating an information obtaining and pushing method according to Embodiment 1 of the present disclosure;
Figure 2 is a schematic flowchart illustrating an information obtaining and pushing method according to Embodiment 2 of the present disclosure;
Figure 3 is a schematic diagram illustrating a picture showing a current spot according to Embodiment 2 of the present disclosure;
Figure 4 is a schematic diagram illustrating a region information list displayed based on a sorting result for a user's selection according to Embodiment 2 of the present disclosure;
Figure 5 is a structural schematic diagram illustrating a mobile terminal according to Embodiment 3 of the present disclosure;
Figure 6 is another structural schematic diagram illustrating a mobile terminal according to Embodiment 3 of the present disclosure;
Figure 7 is a structural schematic diagram illustrating a server according to Embodiment 4 of the present disclosure; and
Figure 8 is another structural schematic diagram illustrating a server according to Embodiment 4 of the present disclosure.

### DETAILED DESCRIPTION

To make the objectives, technical solutions and advantages of the present disclosure more clear, the embodiments of the present disclosure will be further described in detail with reference to the attached drawings.

### Embodiment 1

This embodiment provides an information obtaining method, including:
a mobile terminal sending location information of a current spot to a server, so that the server obtains a region information list based on the current spot through searching according to the location information and sends the region information list based on the current spot to the mobile terminal;
the mobile terminal sending a signal to the server in response to a choice of a user in the region information list; and
the mobile terminal receiving and displaying region information corresponding to the signal returned from the server.

This embodiment also provides an information pushing method, the method including:
a server receiving location information of a current spot of a mobile terminal sent from the mobile terminal;
the server obtaining a region information list based on the current spot through searching according to the location information and sending the region information list based on the current spot to the mobile terminal; and
the server receiving a signal sent from the mobile terminal and returning region information corresponding to the signal to the mobile terminal.

It should be noted that the mobile terminal mentioned in this embodiment and the following embodiments refers to computing devices that can be used on the move, including but not limited to cell phones, laptops, tablet PCs, vehicle computers and so on. There is no restriction to the mobile terminal in this embodiment and the following embodiments.

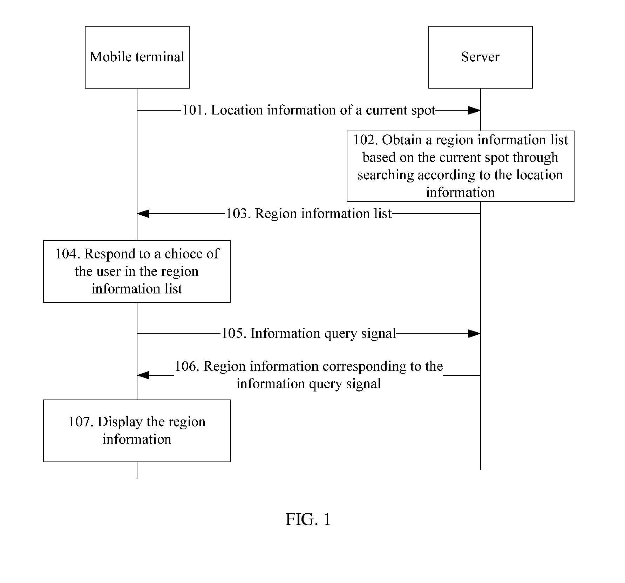

As illustrated in Figure 1, in combination of the information obtaining method and the information pushing method described above, the present embodiment provides an information obtaining and pushing method, specifically including the following blocks.

At block 101, a mobile terminal sends location information of a current spot to a server.

At block 102, the server obtains a region information list based on the current spot through searching according to the foregoing location information.

Here, the region information list at least includes a spot introduction option and a route map option.

At block 103, the server sends the region information list to the mobile terminal.

At block 104, the mobile terminal responds to a choice of a user in the region information list.

At block 105, the mobile terminal sends a signal to the server.

The signal can be an information query signal which carries information of an option selected by the user in the region information list.

At block 106, the server returns region information corresponding to the signal to the mobile terminal.

At block 107, the mobile terminal displays the foregoing region information.

The present embodiment provides an information obtaining and pushing method. In this method, by obtaining a spot where a user currently arrives, pushing a region information list corresponding to the spot to the user, and pushing the region information related to the current spot to the user according to the option selected by the user in the region information list, diverse demands of the user can be met and interaction with the current spot can be improved due to the region information corresponding to the current spot.

### Embodiment 2

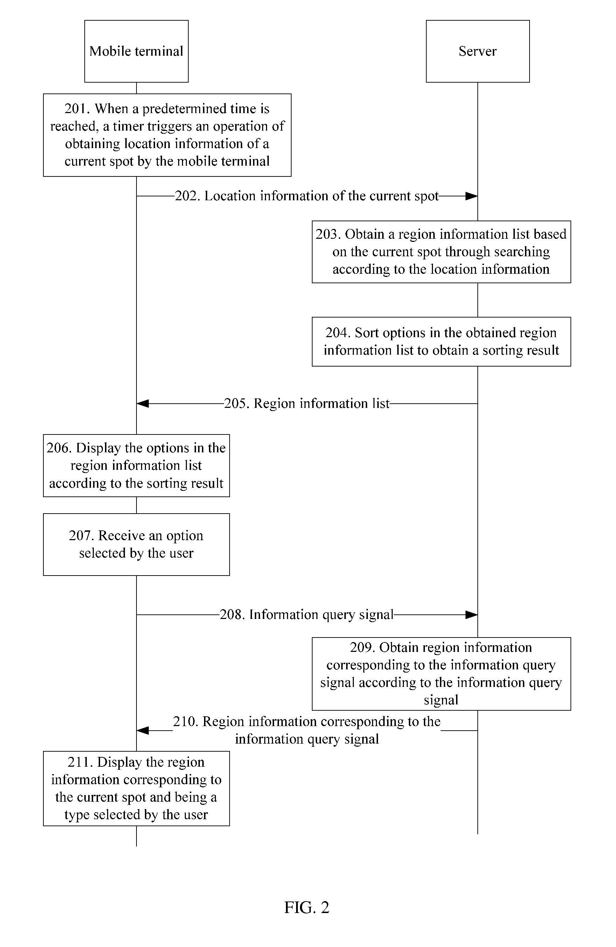

As illustrated in Figure 2, the present embodiment provides an information obtaining and pushing method which is an improvement based on Embodiment 1 and specifically includes the following steps.

At block 201, when predetermined time is reached, a timer triggers the mobile terminal to perform an operation of obtaining location information of its current spot.

Specifically, a timer is set in the mobile terminal to trigger the mobile terminal to perform an operation of obtaining location information of its current spot. For example, the timer is established and enabled to perform a timing operation, so that the timer triggers the mobile terminal to perform the operation of obtaining the location information of its current spot once every 100 seconds.

The predetermined time can be other values besides of 100 seconds, and there is no restriction to the value of the predetermined time in the present embodiment. The location information can be coordinates, latitude and longitude, LBS information of the current spot and the like, and there is no restriction to the detailed contents of the location information in the present embodiment.

Further, this block may be replaced with the following operation.

The mobile terminal receives a positioning request sent by the user and obtains location information of its current spot.

In the present embodiment, as an example, the spot where the user arrives is the Great Wall.

At block 202, the mobile terminal sends location information of its current spot to a server.

At block 203, the server obtains a region information list based on the current spot through searching according to the foregoing location information.

It should be noted that the server stores region information corresponding to respective spots, classifies the region information and provides a classification result by way of a plurality of options embedded in the region information list to the user for selection. Specifically, in the present embodiment, the region information includes at least a spot introduction option and a route map option.

Further, the region information list may include one or more of the following options: a scenic spot brief introduction option, a surrounding food & drink option, a travel strategy option, a downloading software skin option, a promotion information option and a weather option.

For example, when the user arrives at the Great Wall, the region information list corresponding to the Great Wall may include: a landscape brief introduction option, a surrounding food & drink option, a travel strategy option, and a downloading software skin option and so on.

When the user arrives at a supermarket, the region information list corresponding to the supermarket may include: a supermarket brief introduction option, a promotion information option, and a bus route option and so on.

Here, using the region information list may reduce the cost of network traffic for the user when the server pushes region information to the user, since only region information corresponding to an option selected by the user is pushed.

At block 204, the server sorts the options in the obtained region information list to obtain a sorting result.

In order to facilitate the user's selection, the options in the region information list are sorted in the server. For example, when the user arrives at the Great Wall, it can be determined that the region information corresponding to the spot may include landscape brief introduction, surrounding food & drink, travel strategy and software skin downloading related to the Great Wall, and according to the degree of interest of the user in these types, a sorting result may be obtained as the following:

landscape brief introduction, surrounding food & drinks, travel strategy and downloading software skins related to the Great Wall.

At block 205, the server sends the region information list to the mobile terminal.

Further, when the region information list is sent to the mobile terminal, pictures corresponding to the current spot, such as pictures of the Great Wall, may also be sent to the mobile terminal at the same time.

It should be noted that the server stores pictures of respective spots in advance, and alternatively, the server may also obtain the corresponding pictures based on the current spot of the user and send them to the mobile terminal.

At block 206, the mobile terminal displays the options in the region information list according to the sorting result.

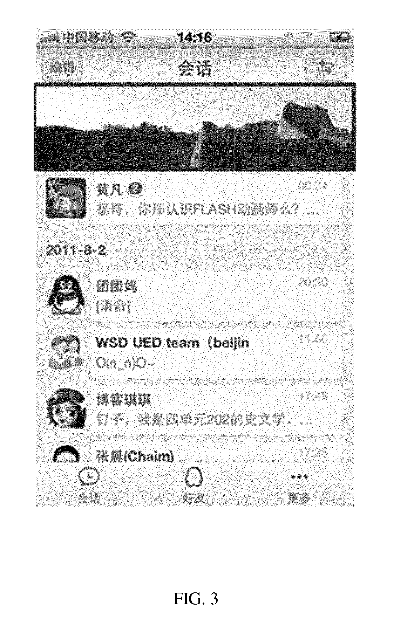

Specifically, the mobile terminal may initially display a picture corresponding to the current spot, as illustrated in Figure 3.

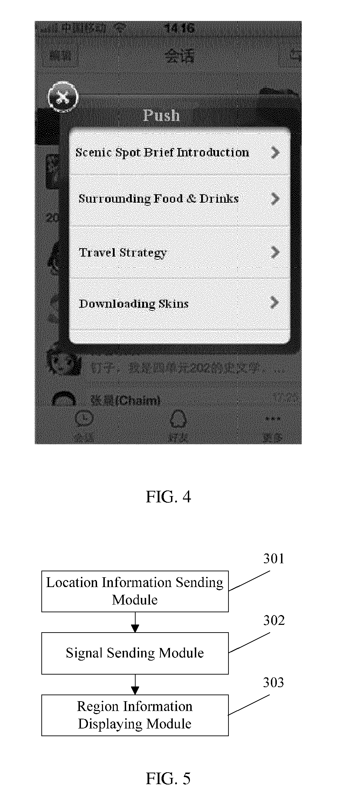

Further, after the user clicks on the picture, respective options are displayed according to the sorting result of the options in the region information list, specifically as illustrated in Figure 4.

At block 207, the mobile terminal receives an option selected by the user.

At block 208, the mobile terminal sends an information query signal to the server.

Here, the information query signal carries the option selected by the user in the region information list.

At block 209, the server obtains region information corresponding to the information query signal through searching according to the information query signal.

It should be noted that if the region information corresponding to the information query signal is stored on the server, then the information that the server pushes to the mobile terminal is void, and this flow will end.

At block 210, the server sends the region information corresponding to the information query signal to the mobile terminal.

At block 211, the mobile terminal displays the region information corresponding to the information query signal.

Further, after block 211, the method may further include: the user disabling the timer.

The present embodiment provides an information obtaining and pushing method. In this method, by obtaining a spot where a user currently arrives, pushing a region information list corresponding to the spot to the user, and pushing region information related to the current spot to the user according to an option selected by the user in the region information list, diverse demands of the user can be met and interaction with the current spot can be improved due to the region information corresponding to the current spot.

### Embodiment 3

As illustrated in Figure 5, the present embodiment provides a mobile terminal including:

a location information sending module 301 configured to send location information of a current spot to a server, so that the server obtains a region information list based on the current spot through searching according to the location information;

a signal sending module 302 configured to send a signal to the server in response to a choice of a user in the region information list; and

a region information displaying module 303 configured to receive and display region information corresponding to the signal returned from the server.

Here, the region information list includes at least an introduction option and a route map option.

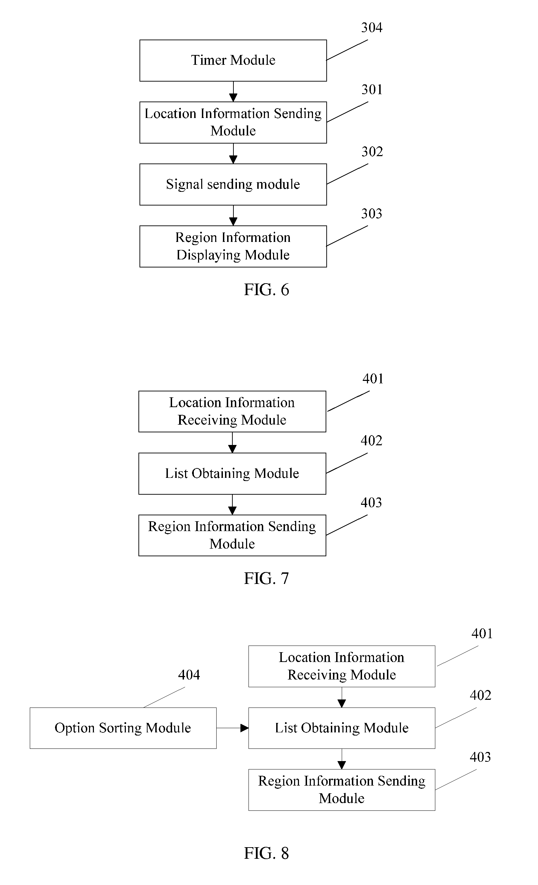

Further, as illustrated in Figure 6, the foregoing mobile terminal may further include:

a timer module 304 configured to obtain the location information of the current spot and control the mobile terminal to display a reminder at a set time interval.

The present embodiment provides a mobile terminal in which by obtaining the spot where a user currently arrives, receiving a region information list corresponding to the spot which is pushed by a server, and receiving related region information of the current spot obtained by the sever according to the option selected by the user in the region information list, diverse demands of the user can be met and interaction with the current spot can be improved due to the region information corresponding to the current spot.

### Embodiment 4

As illustrated in Figure 7, the present embodiment provides a server including:

a location information receiving module 401 configured to receive location information of a current spot of a mobile terminal sent from the mobile terminal;

a list obtaining module 402 configured to obtain a region information list based on the current spot through searching according to the location information and send the region information list based on the current spot to the mobile terminal; and

a region information sending module 403 configured to receive a signal sent from the mobile terminal and return region information corresponding to the signal to the mobile terminal.

Here, the region information list obtained by the list obtaining module 402 at least includes a spot introduction option and a route map option.

Further, as illustrated in Figure 8, the server further includes:

an option sorting module 404 configured to sort the options in the region information list based on the current spot before the list obtaining module 402 sends the region information list based on the current spot to the mobile terminal.

The present embodiment provides a server. In the server, after location information of a current spot where a user arrives is received, a region information list corresponding to the spot is pushed to the user, and region information related to the current spot is pushed to the user according to the option selected by the user in the region information list, diverse demands of the user can be met and interaction with the current spot can be improved due to the region information corresponding to the current spot.

Meanwhile, the present disclosure also provides an information obtaining and pushing system. The system includes a mobile terminal as described in Embodiment 3 and a server as described in Embodiment 4. In this system, by obtaining a spot where a user arrives, pushing a region information list corresponding to the spot to the user, and pushing related region information of the current spot to the user according to the option selected by the user in the region information list, the diverse demands of users can be met and interaction with the current spot can be improved due to the region information corresponding to the current spot.

Those of ordinary skill in the art can understand that all or part of the blocks to implement the foregoing embodiments can be implemented by hardware, or by hardware instructed by programs. The programs may be stored in a computer readable storage medium, such as a read-only memory, a magnetic disk or an optical disk, etc.

It should be understood that the forgoing are only preferred embodiments of the present disclosure and are in no way intended to limit the scope of the present disclosure. Any modifications, equivalent replacements, improvements and the like made within the spirit and principle of the present disclosure should be encompassed in the scope of the present disclosure.

## Claims

1. An information obtaining method, comprising:
a mobile terminal sending location information of a current spot to a server, so that the server obtains a region information list based on the current spot through searching according to the location information and sends the region information list based on the current spot to the mobile terminal;
the mobile terminal sending a signal to the server in response to a choice of a user in the region information list; and
the mobile terminal receiving and displaying region information corresponding to the signal returned from the server.

2. The method according to claim 1, wherein before the mobile terminal sending the location information of the current spot to the server, the method further comprises:
the mobile terminal obtaining the location information of the current spot and displaying a reminder regularly at a set time interval according to a preset timing operation of a timer.

3. The method according to claim 1 or 2, wherein the region information list at least comprises a spot introduction option and a route map option.

4. The method according to claim 3, wherein the region information list further comprises at least one of a scenic spot brief introduction option, a surrounding food & drink option, a travel strategy option, a downloading software skin option, a promotion information option and a weather option.

5. An information pushing method, comprising:
a server receiving location information of a current spot of a mobile terminal sent from the mobile terminal;
the server obtaining a region information list based on the current spot through searching according to the location information and sending the region information list based on the current spot to the mobile terminal; and
the server receiving a signal sent from the mobile terminal and returning region information corresponding to the signal to the mobile terminal.

6. The method according to claim 5, wherein before the sever sending the region information list based on the current spot to the mobile terminal, the method further comprises:
the server sorting options in the region information list based on the current spot.

7. A mobile terminal, comprising:
a location information sending module configured to send location information of a current spot to a server, so that the server obtains a region information list based on the current spot through searching according to the location information;
a signal sending module configured to send a signal to the server in response to a choice of a user in the region information list; and
a region information displaying module configured to receive and display region information corresponding to the signal returned from the server.

8. The mobile terminal according to claim 7, wherein the region information list at least comprises an introduction option and a route map option.

9. The mobile terminal according to claim 7 or 8, wherein the mobile terminal further comprises:
a timer module configured to obtain the location information of the current spot and control the mobile terminal to display a reminder at a set time interval regularly.

10. A server, comprising:
a location information receiving module configured to receive location information of a current spot of a mobile terminal sent from the mobile terminal;
a list obtaining module configured to obtain a region information list based on the current spot through searching according to the location information and send the region information list based on the current spot to the mobile terminal; and
a region information sending module configured to receive a signal sent from the mobile terminal and return region information corresponding to the signal to the mobile terminal.

11. The server according to claim 10, wherein the region information list obtained by the list obtaining module at least comprises a spot introduction option and a route map option.

12. The server according to claim 10 or 11, wherein the server further comprises:
an option sorting module configured to sort options in the region information list based on the current spot before the list obtaining module sends the region information list based on the current spot to the mobile terminal.

13. An information obtaining and pushing system, comprising a mobile terminal and a server;
wherein the mobile terminal comprises:
a location information sending module configured to send location information of a current spot to the server, so that the server obtains a region information list based on the current spot through searching according to the location information;
a signal sending module configured to send a signal to the server in response to a choice of a user in the region information list; and
a region information displaying module configured to receive and display region information corresponding to the signal returned from the server; and
wherein the server comprises:
a location information receiving module configured to receive location information of the current spot of the mobile terminal sent from the mobile terminal;
a list obtaining module configured to obtain the region information list based on the current spot through searching according to the location information and send the region information list based on the current spot to the mobile terminal; and
a region information sending module configured to receive the signal sent from the mobile terminal, and return the region information corresponding to the signal to the mobile terminal.

14. The information obtaining and pushing system according to claim 13, wherein the mobile terminal further comprises:
a timer module configured to obtain the location information of the current spot and control the mobile terminal to display a reminder at a set time interval regularly.

15. The information obtaining and pushing system according to claim 13, wherein the server further comprises:
an option sorting module configured to sort options in the region information list based on the current spot before the list obtaining module sends the region information list based on the current spot to the mobile terminal.
